# EUROPEAN PATENT SPECIFICATION

(11) **EP 0 418 532 B1**
(45) Date of publication and mention of the grant of the patent: **13.04.1994**
(21) Application number: 90115075.5
(22) Date of filing: 06.08.1990
(51) Int. Cl.: B60B 27/00, G01P 3/48

(54) **Assembly for connecting a wheel to a vehicle axle**
Vorrichtung zur Befestigung eines Fahrzeugrades an eine Achse
Dispositif pour la fixation d'une roue de véhicule sur une axe

(30) Priority: 12.09.1989 IT 5333989 U
(43) Date of publication of application: 27.03.1991
(73) Proprietor: IVECO FIAT S.p.A., 10156 Torino (IT)
(72) Inventor: Randone, Claudio, I-10040 Almese (IT)
(74) Representative: Jorio, Paolo

(56) References cited:
- EP-A- 0 306 850
- WO-A-86/02607
- WO-A-87/00290
- DE-A- 2 243 331
- DE-A- 2 319 264
- DE-A- 3 703 395
- SE-B- 310 318
- US-A- 4 079 799

## Description

This invention relates to an assembly for connecting a wheel to the axle of a vehicle, particularly an industrial vehicle.

In this respect, in the present description and claims the term "axle" is to be taken in its widest sense without any limit on the arrangement of the axle in the vehicle and independently of whether the axle concerned is a live axle or not.

Assemblies for connecting a wheel to a vehicle axle are known, comprising a hub and a pair of bearings, generally of the taper roller type, which support the hub radially and axially to the axle. The wheel and its brake drum are connected to the radial flange of the hub by a plurality of bolts.

An assembly of the aforesaid type is disclosed in the document SE-B-310318.

Such known assemblies have a major drawback in their large number of components, and are therefore rather costly and lengthy to mount and set. In particular, the use of a hub and a pair of separate bearings of the taper roller type supporting said hub implies that the axial bearing clearance has to be set, and this setting has to be repeated each time the assembly, particularly the hub, is removed.

Known connection assemblies are also frequently provided with a device for measuring the wheel velocity, this being associated with a braking control device to prevent wheel locking. This measurement device comprises an impulse wheel fixed to the hub, and a sensor facing the impulse wheel and fixed in a projecting manner to the axle. Such an arrangement is disclosed in WO 87/00290.

The use of an impulse wheel further increases the number of components and the related drawbacks concerning costly and lengthy assembly.

The object of the present invention is to provide an assembly for connecting a wheel to a vehicle axle, which is free of the aforesaid drawbacks connected with known assemblies.

Said object is attained according to the present invention by an assembly as claimed in claim 1.

The present invention will be more apparent from the description of a preferred embodiment thereof given hereinafter with reference to the accompanying drawings in which:
Figure 1 is an axial section through an assembly for connecting a wheel to a live axle of an industrial vehicle; and
Figure 2 is a section on the line II-II of Figure 1 to an enlarged scale.

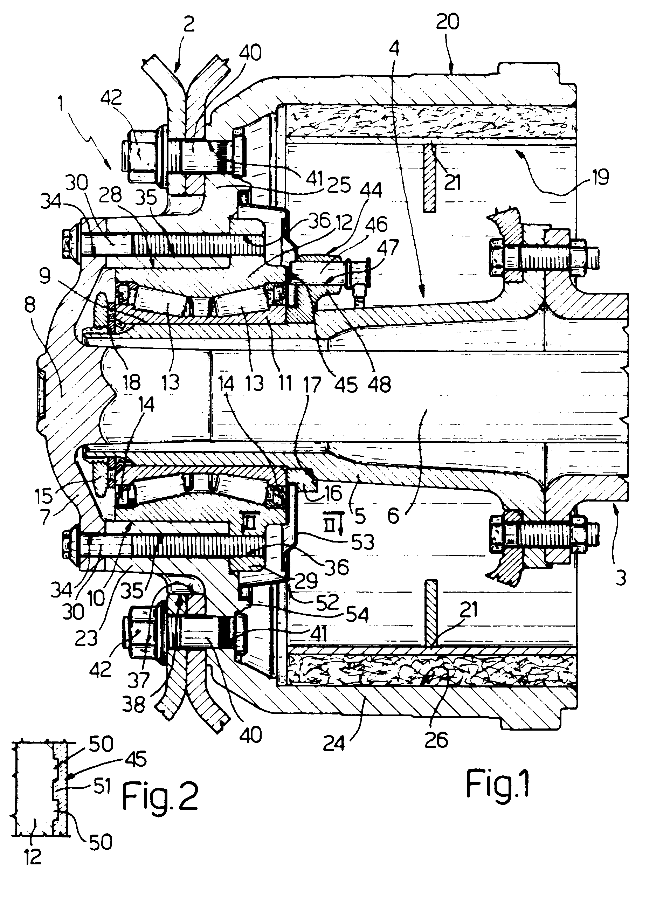

In Figure 1 the reference numeral 1 indicates overall an assembly for connecting a partly shown wheel 2 to an industrial vehicle live axle 3, of which a lateral end portion 4 is shown.

Said portion 4 of the axle 3 comprises a tubular sleeve 5 and an axle shaft 6 housed angularly free within the sleeve 5 and integrally provided with a drive flange 7 extending radially from an end 8 of the axle shaft 6, this end projecting axially outwards from the sleeve 5.

In proximity to its outer end the sleeve 5 comprises a cylindrical portion 9 on which a support unit 10 is mounted. The unit 10 comprises an inner ring 11, an outer ring 11 coaxial therewith, and two rows of taper rollers 13 interposed between said rings 11, 12. The unit 10 is of the sealed type by virtue of a pair of lateral gaskets 14, with lifelong grease lubrication.

The inner ring 11 of the unit 10 is locked axially on the sleeve 5 by a ring nut 15 which clamps it against a spacer ring 16, which abuts axially against a shoulder 17 of the sleeve.

An anti-slackening washer of conventional type is interposed between the ring nut 15 and ring 11.

The connection assembly 1 also comprises a drum brake 19, of which the drum 20 and part of the brake shoes 21 are visible in Figure 1. The drum 20 is substantially of bell shape and comprises a first tubular portion 23 and a second tubular portion 24, both substantially cylindrical and of smaller and larger diameter respectively, and a flat annular wall 25 which joins them integrally together.

The portion 24 houses the brake shoes 12 and has an inner cylindrical surface 26 with which the brake shoes cooperate during braking.

According to the present invention the portion 23 of the drum 20 is mounted directly on the outer ring 12 of the support unit 10, which is provided for this purpose with an outer cylindrical surface 28 for centering the drum, and a annular flange 29, this latter in proximity to that end facing the interior of the vehicle. Specifically, the portion 23 of the drum 20 is contained axially between the flange 29 and the drive flange 7 of the axle shaft 6, to which flanges it is connected by a plurality of angularly equidistant screws 30 passing through axial holes 34, 35 in the drive flange 7 and portion 23 respectively, and screwed into corresponding threaded holes 36 in the flange 29 of the outer ring 12.

The wheel 2, provided with a central hole 37 to be engaged by a centering surface 38 provided on the portion 23 of the drum 20, is fixed against the wall 25 of the drum 20 by a plurality of bolts 40 passing through respective holes in said wall 25, and respective nuts 42.

Finally, the assembly 1 comprises a device for measuring the velocity of the wheel 2, indicated overall by 44, to be connected to a conventional braking control device, not shown, for preventing wheel locking and corresponding skidding. The device 44 comprises an impulse wheel 45 formed on and integral with the front face of the outer ring 12 of the support unit 10, and a magnetic sensor 46 housed in an axial seat provided in a substantially radial appendix 48 of the spacer ring 16 and facing the impulse wheel 45. As is clearly shown in Figure 2, the impulse wheel 45 consists of a plurality of frontal teeth 50 of the ring 12, they being angularly equidistant from each other and conveniently embedded in a layer of applied plastics material 51.

The layer 51 does not influence the magnetic characteristics of the impulse wheel 45, but prevents accumulation of dirt particles between the teeth which, in time, could disturb the reading of the sensor 46.

Finally, the assembly 1 comprises a pair of substantially annular protection plates 52, 53 mounted within an annular projection 54 on the inside of the drum wall 25 and on the spacer ring 16 respectively, with their respectively inner and outer edges facing each other axially.

The operation of the assembly is as follows.

The motion of the axle shaft 6 is transmitted by the flange 7 to the drum 20 (and hence to the wheel 2 connected to it) and to the outer ring 12 of the support unit 10. In known manner, the sensor 46 measures the rotational velocity of the impulse wheel 45, which is equal to that of the wheel 2.

The resultant advantages of the assembly 1 are apparent from an examination of its characteristics.

Firstly, for equal operability, the number of components is smaller than in the case of conventional constructions because the outer ring 12 of the support unit 10 also acts as the wheel hub and incorporates the impulse wheel.

Furthermore, the assembly 1 is particularly rapid and simple to mount and maintain, as no adjustment of the support unit 10 is required, it being simply bolted on, whereas the conventional two-bearing construction requires precise clearance adjustment.

Again, removing the drum does not require removal of the support unit 10, as instead is required in the case of conventional bearings.

Finally, mounting the sensor 56 in a radial appendix of the ring 16 is particularly advantageous, because it does not require support elements to be welded to the sleeve 5 and the sensor 46 does not undergo vibration during operation.

## Claims

1. An assembly for connecting a wheel to a vehicle axle, of the type comprising rolling bearing means (10) interposed between said axle (3) and said wheel (2), a drum brake (19) having a brake drum (20) rigid with said wheel (2), and a velocity measurement device comprising an impulse wheel (45) angularly rigid with said wheel (2) and a fixed sensor (46) facing said impulse wheel (45), characterised in that said rolling bearing means comprise a bearing unit (10) consisting of one inner ring (11) mounted on said axle (3), one outer ring (12) and a plurality of rolling bodies (13) interposed between said inner ring (11) and said outer ring (12), said outer ring (12) comprising at least an integral portion (28,29) for mounting said brake drum (20) thereto, said impulse wheel (45) being formed on and integral with said outer ring (12).

2. An assembly as claimed in claim 1, characterised in that said axle is an industrial vehicle live axle (3) comprising a fixed outer sleeve (5) and an axle shaft (6) housed in said sleeve (5) and provided with an end drive flange (7); said inner ring (11) of said support unit (10) being axially locked on said sleeve (5), said outer ring (12) being connected angularly rigid to said drive flange (7) and to said drum (20).

3. An assembly as claimed in claim 2, characterised in that said outer ring (12) comprises a cylindrical surface (28) for centering said drum (20) and a radial flange (29); said drum (20) comprising a first tubular portion (23) mounted on said cylindrical centering surface (28), said first tubular portion (23) being axially interposed between said drive flange (7) of said axle shaft (6) and said flange (29) of said outer ring (12), and connected to and angularly rigid with said flanges (7, 29).

4. An assembly as claimed in one of the preceding claims, characterised in that said sensor (46) is housed in a radial appendix (48) of a spacer ring (16) axially interposed between said inner ring (11) of said support unit (10) and a shoulder (17) of said sleeve (5).

5. An assembly as claimed in one of the preceding claims, characterised in that said phonic wheel (45) consists of a plurality of angularly equidistant frontal teeth (50) of said outer ring (12) of said support unit (10).

6. An assembly as claimed in claim 5, characterised in that said teeth (50) are embedded in a layer of plastics material (51).

7. An assembly as claimed in any one of the preceding claims, characterised in that said drum (20) comprises a second tubular portion (24) defining internally a cylindrical braking surface (26), and a substantially flat annular wall (25) which joins said first and second tubular portion (23, 24) together, said means for connecting said wheel (2) to said drum (20) comprising a plurality of screws (40) housed in respective axial holes (41) in said annular wall (25) of said drum (20).

8. An assembly as claimed in any one of the preceding claims, characterised in that said rolling bodies of said support unit are two rows of taper rollers (13).

## Patentansprüche

1. Anordnung zur Verbindung eines Rades mit einer Fahrzeugachse, mit einem Rollenlager (10) zwischen der Achse (3) und dem Rad (2), einer Trommelbremse (19) mit einer Bremstrommel (20), die starr mit dem Rad (2) verbunden ist, einer Geschwindigkeitsmeßeinrichtung mit einem Impulsrad (45), das in Drehrichtung fest mit dem Rad (2) verbunden ist, und einem festen Sensor (46), der dem Impulsrad (45) gegenüberliegt, dadurch **gekennzeichnet**, daß das Rollenlager eine Lagereinheit (10) umfaßt, die aus einem Innenring (11), der auf der Achse (3) montiert ist, einem Außenring (12) und einer Anzahl von Rollenkörpern (13) besteht, die zwischen dem Innenring (11) und dem Außenring (12) angeordnet sind, welcher Außenring (12) wenigstens einen einstückig angeformten Bereich (28,29) zur Montage der Bremstrommel (20) umfaßt, wobei das Impulsrad (45) an den Außenring (12) einstückig zu diesem angeformt ist.

2. Anordnung nach Anspruch 1, dadurch **gekennzeichnet**, daß die Achse eine Antriebsachse (3) eines Lastfahrzeugs ist und eine feste äußere Hülse (5) sowie eine Achswelle (6) umfaßt, die in der Hülse (5) liegt und mit einem endseitigen Antriebsflansch (7) versehen ist, welcher Innenring (11) der Lagereinheit (10) axial an der Hülse (5) festgelegt ist, welcher Außenring (12) in Drehrichtung fest verbunden ist mit dem Antriebsflansch (7) der Trommel (20).

3. Anordnung nach Anspruch 2, dadurch **gekennzeichnet,** daß der Außenring (12) eine zylindrische Oberfläche (28) zum Zentrieren der Trommel (20) und einen radialen Flansch (29) umfaßt, welche Trommel (20) einen ersten rohrförmigen Bereich (23) aufweist, der an der zylindrischen Zentrierfläche (28) befestigt ist, welcher rohrförmige Bereich (23) axial zwischen dem Antriebsflansch (7) der Achswelle (6) und dem Flansch (29) des Außenringes (12) liegt und in Drehrichtung fest mit den Flanschen (7,29) verbunden ist.

4. Anordnung nach einem der vorhergehenden Ansprüche, dadurch **gekennzeichnet**, daß der Sensor (46) in einem radialen Ansatz (48) eines Distanzringes (16) axial zwischen dem Innenring (11) der Lagereinheit (10) und einer Schulter (17) der Hülse (5) angeordnet ist.

5. Anordnung nach einem der vorhergehenden Ansprüche, dadurch **gekennzeichnet**, daß das phonische Rad (45) aus einer Anzahl von in gleichen Winkelabständen liegenden vorderen Zähnen (50) des Außenringes (12) der Lagereinheit (10) besteht.

6. Anordnung nach Anspruch 5, dadurch **gekennzeichnet**, daß die Zähne (50) in eine Schicht aus Kunststoffmaterial (51) eingebettet sind.

7. Anordnung nach einem der vorhergehenden Ansprüche, dadurch **gekennzeichnet,** daß die Trommel (20) einen zweiten rohrförmigen Bereich (24) aufweist, der innen eine zylindrische Bremsfläche (26) bildet und eine im wesentliche flache, ringförmige Wand (25) umfaßt, die den ersten und zweiten rohrförmigen Bereich (23,24) miteinander verbindet, welche Einrichtung zum Verbinden des Rades (2) mit der Trommel (20) eine Anzahl von Schrauben (40) umfaßt, die in axialen Bohrungen (41) in der ringförmigen Wand (25) der Trommel (20) liegen.

8. Anordnung nach einem der vorhergehenden Ansprüche, dadurc**h gekennzeichnet**, daß die Rollenkörper der Lagereinheit durch zwei Reihen von Kegelrollen (13) gebildet werden.

## Revendications

1. Un dispositif pour fixer une roue sur un axe de véhicule du type comportant des moyens à palier de roulement (10) disposé entre ledit axe (3) et ladite roue (2), un frein à tambour (19) ayant un tambour de frein (20) fixe par rapport à ladite roue (12), et un dispositif de mesure de la vitesse comprenant une roue à impulsion (45) fixe angulairement par rapport à ladite roue (2) et un palpeur fixé (46) tourné vers ladite roue à impulsion (45), caractérisé en ce que lesdits moyens à palier de roulement comportent une unité de palier (10) comprenant une bague intérieure (11) montée sur ledit axe (3), une bague extérieure (12) et une pluralité de corps de roulement (13) intercalés entre ladite bague intérieure (11) et ladite bague extérieure (12), ladite bague extérieure (12) comprenant au moins une partie d'un seul tenant (28, 29) pour le montage dudit tambour de frein (20) sur celle-ci, ladite roue à impulsion (45) étant formée sur et solidaire de ladite bague extérieure (12).

2. Un dispositif selon la revendication 1, caractérisé en ce que ledit axe est un axe d'entraînement de véhicule industriel (3) comprenant un manchon extérieur fixe (5) et un arbre (6) logé dans ledit manchon (5) et muni d'un flasque d'entraînement d'extrémité (7) ; ladite bague interne (11) de ladite unité de support (10) étant bloquée axialement sur ledit manchon (5), ladite bague extérieure (12) étant reliée de façon angulairement rigide audit flasque d'entraînement (7) et audit tambour (20).

3. Un dispositif selon la revendication 2, caractérisé en ce que ladite bague extérieure (12) comprend une surface cylindrique (28) pour centrer ledit tambour (20) et un flasque radial (29) ; ledit tambour (20) comprenant une première partie tubulaire (23) montée sur ladite surface cylindrique de centrage (28), ladite première partie tubulaire (23) étant intercalée axialement ledit flasque d'entraînement (7) dudit arbre (6) et ledit flasque (29) de ladite bague extérieure (12) et reliée, de façon angulairement rigide, auxdits flasques (7, 29).

4. Un dispositif selon l'une quelconques des revendications précédentes, caractérisé en ce que ledit palpeur (46) est logé dans un appendice radial (48) d'une bague d'écartement (16) intercalée axialement entre ladite bague interne (11) de ladite unité de support (10) et un épaulement (17) dudit manchon (5).

5. Un dispositif selon l'une quelconque des revendications précédentes, caractérisé en ce que ladite roue à impulsion (45) est constituée d'une pluralité de dents frontales et équidistantes (50) de ladite bague extérieure (12) de ladite unité de support (10).

6. Un dispositif selon la revendication 5, caractérisé en ce que lesdites dents (50) sont noyées dans une couche de matériau plastique (51).

7. Un dispositif selon l'une quelconques des revendications précédentes, caractérisé en ce que ledit tambour (20) comprend une seconde partie tubulaire (24) définissant à l'intérieur une surface cylindrique de freinage (26) et une paroi annulaire à peu près plane (25) qui réunit lesdites première et seconde parties tubulaires (23, 24), lesdits moyens pour relier ladite roue (2) audit tambour (20) comprenant une pluralité de vis (40) logées dans des trous axiaux respectifs (41) dans ladite paroi anulaire (25) dudit tambour (20).

8. Un dispositif selon l'une quelconques des revendications précédentes, caractérisé en ce que lesdits corps de roulement de ladite unité de support sont deux rangées de rouleaux coniques (13).
